# EUROPEAN PATENT SPECIFICATION

(11) **EP 2 593 390 B1**
(45) Date of publication and mention of the grant of the patent: **27.05.2015**
(21) Application number: 11734069.5
(22) Date of filing: 12.07.2011
(51) Int. Cl.: B66B 5/00

(54) **A SYSTEM FOR SETTING THE LIFTING CAPACITY OF A LIFT SYSTEM**
SYSTEM ZUR EINSTELLUNG DER HEBEKAPAIZITÄT EINES HEBESYSTEMS
SYSTÈME DE RÉGLAGE DE LA CAPACITÉ DE LEVAGE D'UN SYSTÈME D'ASCENSEUR

(30) Priority: 15.07.2010 DK 201070335
(43) Date of publication of application: 22.05.2013
(73) Proprietor: AIP APS, 3400 Hillerød (DK)
(72) Inventor: GRACIA, Carlos, Legua, E-50015 Zaragoza (ES)
(74) Representative: ZBM Patents ApS
(86) International application number: PCT/EP2011/061844
(87) International publication number: WO 2012/007457

(56) References cited:
- DE-A1- 10 042 724
- JP-A- 59 017 478
- JP-A- 2004 099 303
- JP-A- 2005 145 620

## Description

The present invention relates to a method of setting the lifting capacity of a lift system having a lift and an overload mechanism, which method comprises: to connect the lift to a fixed point via one or more link connectors and a power measurement device; to cause the lift to move to the effect that the one or more link connectors is/are tightened, and a pull X is exerted on the power measurement device; and to output the pull X exerted on the power measurement device when the overload mechanism arrests the movement of the lift.

Lifting equipment such as lifts for individuals, lifts for goods or other lifting systems are used eg in wind turbine towers, masts, towers, silos, etc., and are of great use when technical staff, maintenance staff, tools, etc., are to be transported up and down.

In connection with the manufacture of lifts, it is crucial to be able to measure and adjust the lifting capacity of the lifts to the effect that it complies with safety regulations, equipment and the surroundings.

Earlier on, such measurements of lifting capacity were performed by a bulk volume being arranged in eg a lift. By increasing the bulk volume until the lift was no longer able to ascend, it has been possible to determine the current maximal lifting capacity.

US patent application No. US2002/0011121 describes a method and a device for simulating the application of weight on a lifting device, in particular tower cranes. Fundamentally, the device consists of a power measurement device secured to a fixed point at the one end and to a lifting cable at the opposite end.

JP 2005 145 620 discloses a method according to the preamble of claim 1 and equipment according to the preamble of claim 4

If, in lifting systems, eg an overload control is used which is based on the degree of stretching of a lifting cable, the known methods and devices will not be suitable for taking wear and deformation of the lifting cable into account. It is also a problem in connection with the prior art methods and devices that they do not take dynamic effects into account, in particular when the lift is started. This means that measurements of the lifting capacity become inaccurate and do not provide a true view. Therefore, a need has arisen for remedying the problems associated with the prior art.

By the invention, a method is provided for determining the current lifting capacity of a lift system to enable subsequent setting of the overload mechanism of the lift system to obtain the desired lifting capacity.

This is accomplished in that a current lifting capacity is found by means of the outputted pull X, and the overload mechanism of the lifting system is adjusted to obtain the desired lifting capacity of the lift system; and in that at least one of the one or more link connectors is an elastic link connector, which entails that the lift - following tensioning of the one or more link connectors - can be moved even further away from the fixed point and in that way gradually increases the pull X exerted on the power measurement device.

Hereby a method is accomplished, whereby a gradual increase in the pull exerted on the lift is accomplished. This contributes to taking into account ia wear and deformations of the lifting cable and dynamic effects in connection with the initial starting of the lift. Hereby a true measurement of the current lifting capacity and an option of improved setting of the overload mechanism are enabled.

According to one embodiment, the at least one elastic link connector has an elasticity of 1 - 20 N/mm. Hereby a movement of the lift of the lift system which is sufficient for enabling a reliable measurement is accomplished. According to yet an embodiment, the lift is connected to the fixed point which is mounted in connection with one or more of the guide cables of the lift system. Hereby it will always be possible to find a suitable fixed point for executing the method.

The present invention further relates to equipment for measuring the lifting capacity of a lift system having a lift and a fixed point. This is accomplished by the equipment comprising a power measurement device and one or more link connectors connected to the power measurement device at the one end and suitable for connection to the lift or a fixed point at the opposite end; and in that at least one of the one or more link connectors is an elastic link connector which means that a pull X exerted by the one or more link connectors can be outputted on the power measurement device. Hereby equipment is accomplished which is capable of performing a dynamic measurement of the lifting capacity.

According to a further embodiment, the equipment contains only one link connector connected to the power measurement device at the one end and being suitable for connection to the lift or a fixed point at the opposite end.

The present invention further relates to use of equipment for measuring the lifting capacity of a lift system having a lift and an overload mechanism, mounted in a wind turbine tower. This is accomplished by means of equipment comprising a power measurement device, one or more link connectors connected to the power measurement device at the one end and suitable for connection to the lift or a fixed point at the opposite end, and in particular in that at least one of the one or more link connectors is an elastic link connector which means that pull X exerted by the one or more link connectors can be outputted on the power measurement device.

These and other properties and advantages that characterise embodiments of the invention are set forth in particular in the figures, the specification and the claims.

In the following, embodiments of the invention are described with reference to the accompanying figures. It should be emphasized that the embodiments shown are exemplary, and that the invention is not limited thereto.
Figure 1 shows a schematic view of a lift system and a device for simulating load and measuring lifting capacity;
Figure 2 shows an explanatory sketch of an overload mechanism according to an embodiment of the invention.

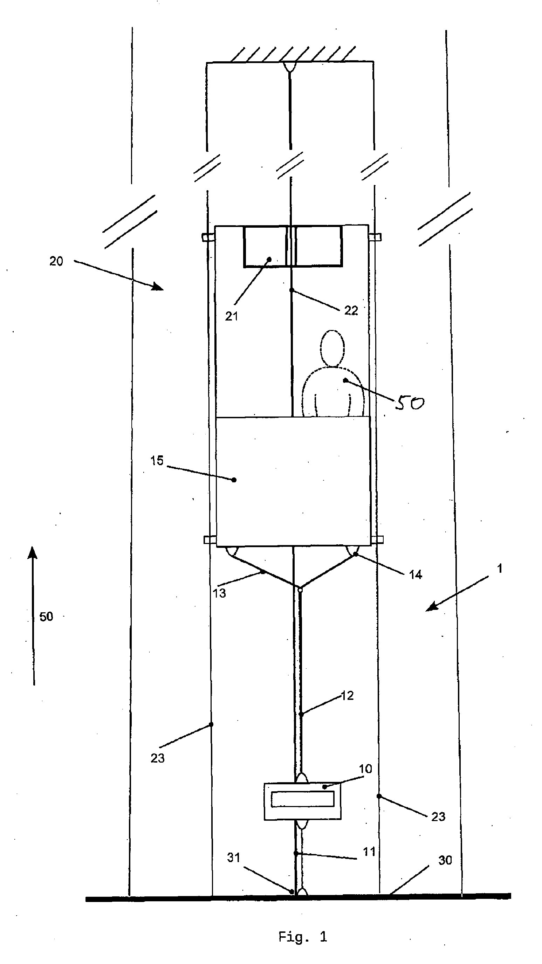

With starting point in figure 1, embodiments of the invention will be described in the following.

Figure 1 shows a lifting system 20 comprising a lift 15 for accommodating crew and equipment, a lifting cable 22 and lifting gear 21. The lifting gear 21 contributes to moving the lift 15 up and down and comprises ia a winch haulage (not shown) such as a winding gear, an overload mechanism (not shown and a motor (not shown) for driving the lifting gear. The lifting gear 21 is mounted in connection with the lift 15 to the effect that the lift 15 can be moved along the lifting cable 22. The lifting cable 22 is secured at the top of eg a wind turbine tower and extends through the lifting gear 21 and the lift 15 down to the bottom of the tower. The lifting cable extends through a cable pull in the lifting gear 21 where friction between the cable pull and the lifting cable 22 contributes to enabling the lift to be moved upwards along the lifting cable 22. The overload mechanism continuously measures how much weight is lifted by the lift system 20. If the lift system 20 is exposed to a weight that exceeds the lifting capacity, the overload mechanism contributes to arresting the ascent of the lift. The ascent and descent of the lift can be operated in several different ways, such as by an individual riding the lift 15 as such or via a remote control by an individual who is on the ground 30. To the person skilled in the art, the lift system 20 may have many different embodiments, and embodiments according to the invention lend themselves for use in connection with several different types of lift systems.

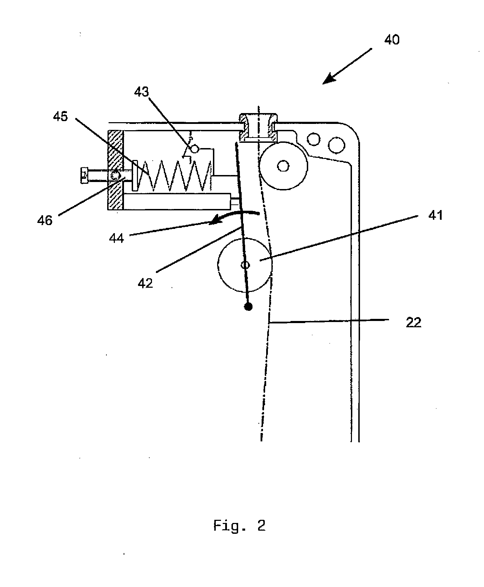

Figure 2 shows an explanatory sketch of an overload mechanism 40 according to one embodiment of the invention. By means of a lever 42 and a turnable roller 41 which is in communication with the lifting cable 22 of the lifting gear, the overload mechanism 40 continuously records the weight to which the lift system is exposed. The higher the weight is to which the lift system 20 is exposed, the more the roller 41 and the lever 42 will be shifted in the direction of the arrow 44. If the lifting cable 22 is exposed to a weight that exceeds the current lifting capacity, the lever 42 is shifted so much that it actuates an overload switch 43. The overload switch 43 contributes to arresting the ascent of the lift. Thus, in this embodiment the overload mechanism assists in defining the lifting capacity of the lift system 20. By adjustment of the overload mechanism 40, it is possible to modify the lifting capacity of the lift system. The overload mechanism 40 is adjusted by variation of the magnitude of a force by which the spring 45 is biased by means of the screw 46.

Figure 1 further shows a device 1 for simulating load and measuring lifting capacity. The device 1 partakes in a system for setting the lifting capacity of a lift system 20. The device 1 comprises an elastic link connector 12 connected directly or indirectly to a lift 15 at the one end and a power measurement device 10 at the opposite end. As a power measurement device 10, eg a dynamometer, a Newton meter, scales or a system wherein the exact prolongation of a spring can be recorded may be used and be used to calculate a force. Apart from being connected to the elastic link connector 12, the power measurement device 10 is also connected to a fixed point 31, such as an eyelet mounted in a foundation, floor or other coating on the ground 30. According to an alternative embodiment (not shown), the fixed point 31 is connected to the guide cables 23 of the lift system that contribute to guiding the movements of the lift. According to such embodiment the fixed point 31 can be mounted eg on a beam or other link connector which is mounted between the guide cables 23. The power measurement device 10 is connected to the fixed point 31 via a second link connector 11 such as a line or strap. The power measurement device 10 is arranged so as to be capable of measuring the force by which the elastic link connector 12 is being pulled. In the shown embodiment, the elastic link connector is connected indirectly to the lift 15 via a device 13 secured in two eyelets 14 on the underside of the lift 15. According to an alternative embodiment (not shown) the elastic link connector 12 is attached directly to the underside of the lift 15.

The elastic link connector 12 may have many different embodiments, such as an elastic band, a spring or other flexible device.

Depending on the lift system 20 in question and eg the lifting gear 21 used, it is possible to vary the configuration of the elastic link connector 12. If the lift 15 is moved eg at a higher speed, it will, in some cases, be advantageous to use a more flexible link connector 12.

According to alternative embodiments of the invention, different combinations of a power measurement device 10 and one or more link connectors (11, 12) are used. As an alternative to the embodiment shown in figure 1, the power measurement device 10 can be mounted directly on a platform, a foundation, a floor or other coating on the ground 30. Then the power measurement device 10 is connected to the lift 15 by means of an elastic link connector 12. Alternatively, the power measurement device 10 can be mounted directly onto the lift 15 and be connected to a fixed point 31 with an elastic link connector 11. When the lifting capacity of a lift system 20 is to be determined, the lift 15, the elastic link connector 12, and the power measurement device 10 are connected as described above. Then, an operator 50 enters the lift 15, and the lifting gear 21 is actuated to the effect that the lift moves in the direction of movement as indicated by the arrow 50. Thus, the lift 15 moves away from the fixed point 31 and brings about a pull in the elastic link connector 12. As a consequence, the elastic link connector 12 will exert a pull X on the power measurement device 10. The power measurement device 10 continuously records the pull X. In pace with the lift 15 being moved still further away from the fixed point, the elastic link connector 12 is stretched and tensioned, and the pull X is increased.

At a given time, the pull X will be of such magnitude that the oversold mechanism of the lifting gear disables the engine. Hereby, the lifting capacity of the lift system 20 has been reached, and the pull X is outputted on the power measurement device 10. The current lifting capacity of the lift system 20, defined by the overload mechanism, is found by addition of the outputted pull X and the weight of the operator. The outputted pull thus corresponds to the current lifting capacity minus the weight of the operator.

Now, the lifting capacity of the lift system can be maintained at the current level or be set to be higher or lower in relation to the desired lifting capacity. The lifting capacity of the lift system is set by adjustment of the overload mechanism 40. The adjustment as such of the overload mechanism is preferably carried out after the lift has been lowered, and the elastic link connector 12 is no longer tensioned. Following adjustments to the overload mechanism 40, and ensuing modification/setting of the lifting capacity, the above-described method for determining the lifting capacity of the lift system can be repeated.

The elastic link connector 12 brings about a slower increase of the pull X than would have been the case if only a conventional lifting line had been used, such as a wire. Hereby it is possible to use the above-referenced method for determining and setting the lifting capacity of a lift system, in particular in cases where the movements of the lift cannot be fine-tuned.

## Claims

1. A method of setting the lifting capacity of a lift system (20) having a lift (15) and an overload mechanism (40), which method comprises:
• to connect the lift (15) to a fixed point (31) via one or more link connectors and a power measurement device (10);
• to cause the lift (15) to move to the effect that the one or more link connectors are tightened, and a pull X is exerted on the power measurement device (10);
• to output the pull X exerted on the power measurement device (10)
when the overload mechanism (40) arrests the movement of the lift, **characterised in that** a current lifting capacity is found by means of the outputted pull X, and the overload mechanism (40) of the lifting system is adjusted to obtain the desired lifting capacity of the lift system (20); and **in that** at least one of the one or more link connectors is an elastic link connector, which entails that the lift (15) - following tensioning of the one or more link connectors - can be moved even further away from the fixed point (31) and **in that** way gradually increases the pull X exerted on the power measurement device (10).

2. A method according to claim 1, **characterised in that** at the at least one elastic link connector has an elasticity of 1 - 20 N/mm.

3. A method according to claim 1 or 2, **characterised in that** the lift (15) is connected to the fixed point (31) which is mounted in connection with one or more of the guide cables (23) of the lift system.

4. Equipment for measuring the lifting capacity of a lift system 20 with a lift (15) and a fixed point (31), which equipment comprises:
• a power measurement device (10),
• one or more link connectors connected to the power measurement device (10) at the one end and suitable for connection to the lift (15) or a fixed point (31) at the opposite end;
**characterised in that** at least one of the one or more link connectors is an elastic link connector which means that a pull X exerted by the one or more link connectors can be outputted on the power measurement device (10); and the equipment comprising an adjustable overload mechanism (40).

5. Equipment according to claim 4, **characterised in that** the equipment contains one only link connector connected to the power measurement device (10) at the one end and suitable for connection to the lift (15) or a fixed point (31) at the opposite end.

6. Equipment according to claim 4 or 5, **characterised in that** the at least one elastic link connector has an elasticity of 1 - 20 N/mm.

7. Use of an equipment for measuring and setting the lifting capacity of a lift system (20) having a lift (15) and an overload mechanism, mounted in a wind turbine tower, which equipment comprises:
• a power measurement device (10);
• one or more link connectors connected to the power measurement device (10) at the one end and suitable for connection to the lift (15) or a fixed point (31) at the opposite end,
**characterised in that** at least one of the one or more link connectors is an elastic link connector, which means that a pull X exerted by the one or more link connectors can be outputted on the power measurement device (10), and the overload mechanism (40) is adjustable.

8. Use of equipment according to claim 7, **characterised in that** the at least one elastic link connector has an elasticity of 1 - 20 N/mm.

9. Use of equipment according to claim 7 or 8, **characterised in that** the lift (15) is connected to the fixed point (31) which is mounted in connection with one or more of the guide cables (23) of the lift system.

## Patentansprüche

1. Ein Verfahren zur Einstellung der Hebekapazität eines Hebesystems (20), welches einen Aufzug (15) und einen Überlastmechanismus (40) hat, welches Verfahren folgendes umfasst:
• das Verbinden des Aufzugs (15) mit einem Festpunkt (31) durch eine oder mehrere Verbindungsvorrichtungen und eine Strommessvorrichtung (10);
• das Herbeiführen einer Bewegung des Aufzugs (15), so dass die eine oder die mehreren Verbindungsvorrichtungen gespannt werden und eine Zugkraft X auf die Strommessvorrichtung (10) ausgeübt wird;
• das Ausgeben der ausgeübte Zugkraft X an der Strommessvorrichtung (10),
wenn der Überlastmechanismus (40) die Bewegung des Aufzugs hemmt;
**dadurch gekennzeichnet, dass** eine momentane Hebekapazität durch die ausgegebene Zugkraft X ermittelt wird, und der Überlastmechanismus (40) des Hebesystems eingestellt ist, um die gewünschte Hebekapazität des Hebesystems (20) zu erhalten; und **dadurch gekennzeichnet, dass** mindestens eine der einen oder mehreren Verbindungsvorrichtungen eine elastische Verbindungsvorrichtung ist, welche zur Folge hat, dass der Aufzug (15), nachdem die eine oder die mehreren Verbindungsvorrichtungen gespannt worden sind, noch weiter vom Festpunkt (31) entfernt bewogen werden kann und somit die auf die Strommessvorrichtung (10) ausgeübte Zugkraft X allmählich erhöht.

2. Ein Verfahren nach Anspruch 1, **dadurch gekennzeichnet dass** mindestens eine elastische Verbindungsvorrichtung eine Elastizität von 1- 20 N/mm hat.

3. Ein Verfahren nach Anspruch 1 oder 2, **dadurch gekennzeichnet, dass** der Aufzug (15) mit dem Festpunkt (31) verbunden ist, welcher in Zusammenhang mit einem oder mehreren der Kabelführungen (23) des Hebesystems montiert ist.

4. Ausrüstung zur Messung der Hebekapazität eines Hebesystems (20), welches einen Aufzug (15) und einen Festpunkt (31) hat, welche Ausrüstung folgendes umfasst:
• eine Strommessvorrichtung (10),
• eine oder mehrere Verbindungsvorrichtungen, die mit der Strommessvorrichtung (10) an dem Ende verbunden sind und die zur Verbindung mit dem Aufzug (15) bzw. einem Festpunkt (31) am anderen Ende geeignet sind.
**dadurch gekennzeichnet, dass** mindestens eine der einen oder mehreren Verbindungsvorrichtungen eine elastische Verbindungsvorrichtung ist, was bedeutet, dass eine durch die eine oder die mehreren Verbindungsvorrichtungen ausgeübte Zugkraft X an der Strommessvorrichtung (10) ausgegeben werden kann; und wobei die Ausrüstung einen einstellbaren Überlastmechanismus (40) umfasst.

5. Ausrüstung nach Anspruch 4, **dadurch gekennzeichnet, dass** die Ausrüstung eine einzige Verbindungsvorrichtung enthält, die an dem Ende mit der Strommessvorrichtung (10) verbunden ist und die zur Verbindung mit dem Aufzug (15) bzw. einem Festpunkt (31) am anderen Ende geeignet ist.

6. Ausrüstung nach Anspruch 4 oder 5, **dadurch gekennzeichnet, dass** die mindestens eine elastische Verbindungsvorrichtung eine Elastizität von 1 - 20 N/mm hat.

7. Verwendung einer Ausrüstung zur Messung und Einstellung der Hebekapazität eines Hebesystems (20), welches einen Aufzug (15) und einen auf einem Windturbinenturm montierten Überlastmechanismus hat, welche Ausrüstung folgendes umfasst:
• eine Strommessvorrichtung (10);
• eine oder mehrere Verbindungsvorrichtungen, die an dem Ende mit der Strommessvorrichtung (10) verbunden sind und die zur Verbindung mit dem Aufzug (15) bzw. einem Festpunkt (31) an dem anderen Ende geeignet sind, **dadurch gekennzeichnet, dass** mindestens eine der einen oder mehreren Verbindungsvorrichtungen eine elastische Verbindungsvorrichtung ist, was bedeutet, dass eine durch die eine oder durch die mehreren Verbindungsvorrichtungen ausgeübte Zugkraft X an der Strommessvorrichtung (10) ausgegeben werden kann und der Überlastmechanismus (40) einstellbar ist.

8. Verwendung einer Ausrüstung nach Anspruch 7, **dadurch gekennzeichnet, dass** die mindestens eine elastische Verbindungsvorrichtung eine Elastizität von 1- 20 N/mm hat.

9. Verwendung einer Ausrüstung nach Anspruch 7 oder 8, **dadurch gekennzeichnet, dass** der Aufzug (15) mit dem Festpunkt (31) verbunden ist, welcher in Zusammenhang mit einer oder mehreren der Kabelführungen (23) des Hebesystems montiert ist.

## Revendications

1. Un procédé de réglage de la capacité de levage d'un système (20) d'ascenseur ayant un ascenseur (15) et un mécanisme (40) de surcharge, comprenant ledit procédé :
• connecter l'ascenseur (15) à un point fixe (31) moyennant un ou plusieurs éléments
de connexion et un dispositif (10) de mesure de puissance ;
• entraîner un mouvement de l'ascenseur (15) par lequel l'un ou les plusieurs éléments de connexion sont tendus et une force de traction X est exercée sur le dispositif (10) de mesure de puissance ;
• délivrer la force de traction X exercée sur le dispositif (10) de mesure de puissance lorsque le mécanisme (40) de surcharge arrête le mouvement de l'ascenseur ;
**caractérisé en ce que** la capacité de levage actuelle est obtenue moyennant la force de traction X délivrée, et le mécanisme (40) de surcharge du système d'ascenseur est ajusté afin d'obtenir la capacité de levage désirée du système (20) d'ascenseur ; et **en ce qu'**au moins un de l'un ou des plusieurs éléments de connexion est un élément de connexion élastique, ce qui implique que l'ascenseur (15) - après que l'un ou les plusieurs éléments de connexion a/ont été tendu(s) - peut être éloigné davantage du point fixe (31) et qu'il augmente ainsi graduellement la force de traction X exercée sur le dispositif (10) de mesure de puissance.

2. Un procédé selon la revendication 1, **caractérisé en ce que** l'au moins un élément de connexion élastique a une élasticité de 1- 20 N/mm.

3. Un procédé selon la revendication 1 ou 2 **caractérisé en ce que** l'ascenseur (15) est relié au point fixe (31) qui est monté en connexion avec un ou avec plusieurs câbles (23) de guidage du système d'ascenseur.

4. Équipement de mesure de la capacité de levage d'un système (20) d'ascenseur ayant un ascenseur (15) et un point fixe (31), comprenant ledit équipement :
• un dispositif (10) de mesure de puissance ;
• un ou plusieurs éléments de connexion relié(s) au dispositif (10) de mesure de puissance à l'une des extrémités et étant approprié(s) pour être relié(s) à l'ascenseur (15) ou à un point fixe (31) à l'extrémité opposée ;
**caractérisé en ce qu'**au moins un de l'un ou des plusieurs éléments de connexion est un élément de connexion élastique, ce qui signifie qu'une force de traction X exercée par l'élément ou par les plusieurs éléments de connexion peut être délivrée au dispositif (10) de mesure de puissance ; et comprenant l'équipement un mécanisme (40) de surcharge ajustable.

5. Équipement selon la revendication 4, **caractérisé en ce que** l'équipement contient un seul élément de connexion relié au dispositif (10) de mesure de puissance à l'une des extrémités et étant approprié pour être relié à l'ascenseur (15) ou à un point fixe (31) à l'extrémité opposée.

6. Équipement selon la revendication 4 ou 5, **caractérisé en ce que** l'au moins un élément de connexion élastique a une élasticité de 1- 20 N/mm.

7. Utilisation d'un équipement de mesure et réglage de la capacité de levage d'un système (20) d'ascenseur ayant un ascenseur (15) et un mécanisme de surcharge, monté sur une tour d'éolienne, comprenant ledit équipement :
• un dispositif (10) de mesure de puissance ;
• un ou plusieurs éléments de connexion relié(s) au dispositif (10) de mesure de puissance à l'une des extrémités et étant approprié(s) pour être relié(s) à l'ascenseur (15) ou à un point fixe (31) à l'extrémité opposée,
**caractérisé en ce qu'**au moins un de l'un ou des plusieurs éléments de connexion est un élément de connexion élastique, ce qui signifie qu'une force de traction X exercée par l'un ou par les plusieurs éléments de connexion peut être délivrée au dispositif (10) de mesure de puissance, et que le mécanisme (40) de surcharge est ajustable.

8. Utilisation d'un équipement selon la revendication 7, **caractérisé en ce que** l'au moins un élément de connexion élastique a une élasticité de 1- 20 N/mm.

9. Utilisation d'un équipement selon la revendication 7 ou 8, **caractérisé en ce que** l'ascenseur (15) est relié au point fixe (31) qui est monté en connexion avec un ou avec plusieurs câbles (23) de guidage du système d'ascenseur.
